# EUROPEAN PATENT APPLICATION

(11) **EP 2 072 966 A1**
(43) Date of publication of application: **24.06.2009**
(21) Application number: 08103732.7
(22) Date of filing: 25.04.2008
(51) Int. Cl.: G01D 7/12

(54) **Speech generating means for use with signal sensors**

(30) Priority: 19.12.2007 US 959686
(71) Applicant: Omega Engineering, Inc., Stamford CT 06907 (US)
(72) Inventor: Hollander, Milton, Stamford, CT, 06906 (US); Baghai, Shahin, Trumbull, CT, 06611 (US); Liu, Feng, ORANGE, CT, 06477 (US)
(74) Representative: Schmit, Christian Norbert Marie

(57) **Abstract**

An apparatus includes receiving circuitry for receiving a signal; and a speech module for converting the signal into speech.

## Description

This is a continuation-in-part of U.S. Patent Application No. 10/839,096, filed May 5, 2004 which claims the benefit of U.S. Provisional Patent Application No. 60/468,584, filed on May 7, 2003, both of which are incorporated herein by reference in their entirety. This application also claims the benefit of U.S. Provisional Patent Application No. 60/913,647, filed on April 24, 2007, which is incorporated by reference herein in its entirety.

The present embodiments relate to measuring devices and, more particularly, to the operation of measuring equipment.

### Brief Description of Related Developments

U.S. Pat. No. 4,949,274 (Omega Engineering, Inc.), incorporated herein by reference, discloses measuring devices, and in particular electronic multimeters, which measure various parameters such as electric current, voltage and resistance, via hand-held measurement probes which are brought into contact with circuits or components to be tested. The multimeters visually display the sensed signals, i.e. the measured values or test results. The multimeters disclosed in this U.S. patent also have built-in speech synthesizers enabling the meters to speak the measured values in addition to displaying them visually. The synthesizer circuitry is designed to accommodate a replaceable speech module, so that different language modules may be inserted into the meters. This allows the meter design to remain the same whilst enabling the language spoken by the meter to be changed to suit the country in which the meter is to be used.

Other forms of apparatus which incorporate speech synthesizers include vehicle navigation systems which give the driver verbal route directions, and aircraft instrument systems which give the pilot verbal warnings and instructions for corrective procedures.

### SUMMARY

In one exemplary embodiment, an apparatus includes receiving circuitry for receiving a signal, and a speech module for converting the signal into speech.

In another embodiment, a method includes receiving a signal from at least one measuring device, and converting the signal into speech.

In yet another embodiment, a system includes a measuring device; a sensor for providing a measurement signal; and a verbalizer module connected between the measuring device and the sensor having receiving circuitry for receiving the measurement signal; a speech module for converting the signal into speech, and a port for providing the signal to the measurement device, wherein the operation and presence of the verbalizer module is transparent to the measuring device as if the measuring device is receiving signals directly from the sensor.

### BRIEF DESCRIPTION OF THE DRAWINGS

The foregoing aspects and other features of the disclosed embodiments are explained in the following description, taken in connection with the accompanying drawings, wherein:

FIG. 1 is a perspective view showing the outward appearance of a measuring device to which a speech module according to an exemplary embodiment is connected in a first configuration;

FIG. 2 is a perspective view similar to FIG. 1 showing a speech module according to an exemplary embodiment connected to a measuring device in a second configuration;

FIG. 3 is a circuit block diagram of another exemplary embodiment of a speech module;

FIG. 4 is a perspective view showing the outward appearance of a measuring device to which another speech module according to an exemplary embodiment is connected in a first configuration;

FIG. 5 is a perspective view similar to FIG. 4 showing a speech module according to an exemplary embodiment is connected to a measuring device in a second configuration;

FIG. 6 is a circuit block diagram of another exemplary embodiment of a speech module;

FIG. 7 is a block diagram of a measuring device in accordance with an exemplary embodiment;

FIG. 8 is a circuit block diagram of another exemplary embodiment of a measuring device;

FIGS. 9A-9F are exemplary illustrations of measuring devices in accordance with an exemplary embodiment;

FIG. 10 shows illustrations of speech modules in accordance with exemplary embodiments in different configurations and operational states; and

FIGS. 11A-11D show exemplary packaging implementations of the disclosed embodiments.

### DETAILED DESCRIPTION OF THE EXEMPLARY EMBODIMENTS

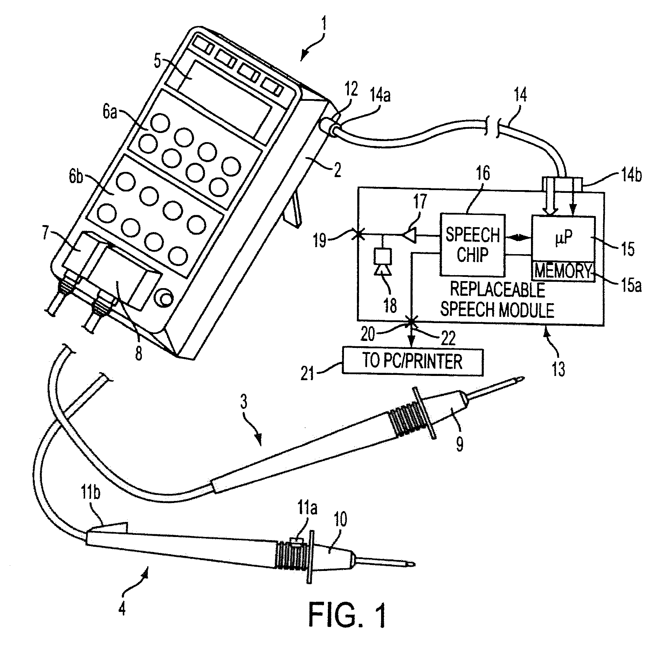

FIG. 1 shows a measuring device 1. In one embodiment, measuring device 1 may be similar to the multimeter described with reference to FIG. 1 of our U.S. Pat. No. 4,949,274, but without any built-in speech synthesizer circuitry. The measuring device may be any suitable test or process measurement device, for example, any one or any combination of a pressure, temperature, humidity, gas, pH, infrared, ultraviolet, visible light, voltage, current, power, conductivity, strain, or acceleration meter or test equipment.
Although the embodiments disclosed will be described with reference to the embodiments shown in the drawings, it should be understood that the embodiments disclosed can be embodied in many alternate forms of embodiments. In addition, any suitable size, shape or type of elements or materials could be used.
The measuring device 1 includes a housing 2, and is operable by two hand-held contact probes 3 and 4. Contact probe 3 is a neutral, reference or "cold" probe and is used to contact the negative or ground test point of a circuit under test, whilst probe 4 is the live, sensing or "hot" probe which is used to contact a live or positive test point. The housing 2 contains known meter circuitry including a processor (not shown), a visual display such as a digital LCD display 5, and function select button switches 6a and 6b. The upper rows of buttons 6a are test format buttons which enable the user to select the particular parameter to be measured (e.g. including voltage, current, resistance and temperature); the scale or range to be used (e.g. including volts or millivolts); and any other function defining a parameter test procedure which is required by the meter circuitry to accurately measure and report test results.
The lower rows of buttons 6b are report format buttons which enable the user to select the desired report format, e.g. store measured values in memory for later display/recording, continuous readout, periodic readout, number of significant digits, and any other functions defining reporting procedures that may be required.

The contact measurement probes 3 and 4 are removable, and are connected to the meter circuitry via flexible leads and plugs 7 and 8 which plug into corresponding sockets in the meter housing. At their free ends, the probes have handles 9 and 10 to facilitate manual manipulation. The handle 10 of the hot probe 4 incorporates a control unit including switches 11 a, 11b. The control unit is connected to the processor or other circuitry in the meter housing via multiple conductors in the probe, to enable the user optionally to change the meter functions remotely via the handle 10 instead of directly via the meter switches 6a, 6b. As disclosed in our aforesaid U.S. patent, the switches 11 a, 11b are push-button selector switches which, each time that they are pressed, trigger the processor to cycle or advance stepwise through the various options of the respective test format and report format.

The measuring device also incorporates a data output connector 12, such as a telephone jack socket or RS 232 port, for enabling test results to be periodically or continuously transmitted to a peripheral device.

As shown in FIG. 1, a speech module 13 in accordance with an exemplary embodiment is connected to the data output socket 12 by an input lead 14 having appropriate connector plugs 14a, 14b at its opposite ends. The module, the circuitry of which is shown diagrammatically, incorporates a microprocessor 15, which may also be referred to as a microcontroller, and associated memory 15a, connected to a speech synthesizer chip 16. The chip 16 is connected to an amplifier 17 which drives a loud speaker 18 or other electro acoustic transducer for enunciating audible speech. In other embodiments, the chip 16 may be connected directly to the loud speaker 18 or other electro acoustic transducer. A first connector, e.g. socket 19, is provided for connection to an external electro acoustic transducer, such as headphones (not shown). A second connector, e.g. socket 20, is provided for connection to one of a number of standard peripheral devices 21, e.g. a personal computer, a printer, recorder, data logger, or processor for storage/analysis, which would, in the absence of the speech module, normally have been plugged into the data output socket 12 via an appropriate lead 22.

In a basic form of speech module, the microprocessor 15 stores the meter data, i.e. the measured values/test results, and translates the data into signals that causes the speech chip 16 to enunciate, via the speaker, headphones, etc., the data visually displayed on the meter display 5. However, the microprocessor can also be programmed and/or controlled to cause the speech chip 16 to enunciate data or information not displayed by the visual display 5, or in greater detail. For example, the enunciated data can give the measured values to more or less significant digits, and/or can give the data in different test or report modes, and/or can be the result of further processing by the microprocessor. Additionally or alternatively, the enunciated data can take the form of verbal warnings and/or instructions to the user, if the data received from the meter deviates from predetermined acceptable parameters, such as predetermined values or ranges. The speech module thus possesses additionally capabilities not possessed by the measuring device itself.

In order to select the required output, the speech module 13 incorporates appropriate test and/or report format switches or key pads (not shown) similar to those (6a, 6b) incorporated into the measuring device 1. Switch means are also provided to activate and deactivate the synthesized speech facility. Furthermore, the speech module 13 can also incorporate other facilities of the measuring device itself, such as a visual display. Incorporation/duplication of measuring device facilities in the speech module are particularly advantageous if the speech module and the user are located remote from the measuring device 1. In this event, it will be appreciated that the data input line 14 to the speech module could be replaced by a radio or other wireless link. This can be effected, for example by a transmitter or transceiver plugged into the meter data output socket 12, and a receiver or transceiver incorporated in the speech module, or plugged into the speech module data input socket.

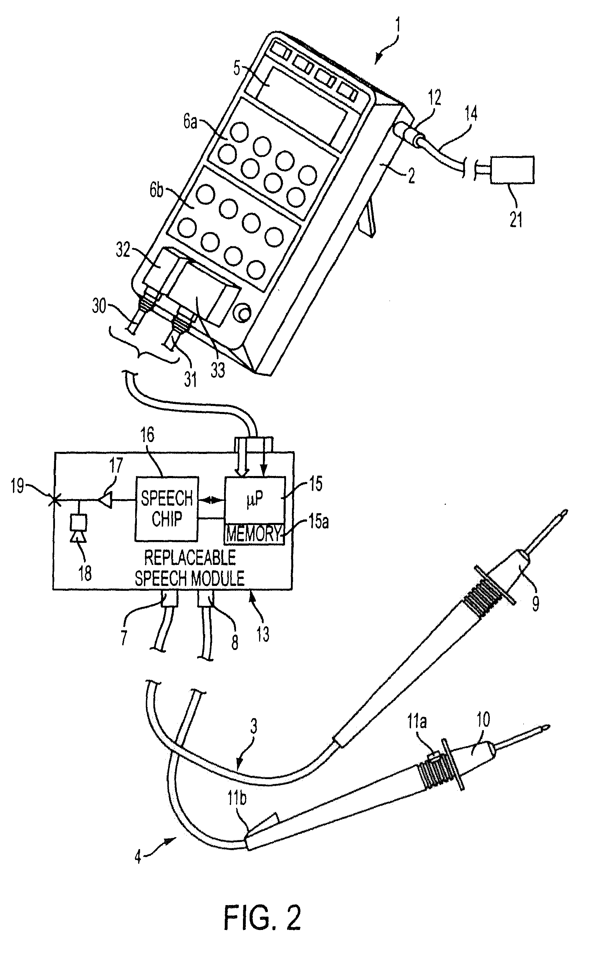

FIG. 2 shows an alternative configuration in which the speech module 13, which may be the same as that described in reference to FIG. 1, forms a connector between the measuring device 1 and probes 3 and 4. The module will incorporate connectors, i.e. sockets compatible with the probe plugs 7 and 8, to receive the latter plugs, and leads 30, 31 incorporating plugs 32, 33 compatible with the corresponding sockets in the meter, to connect the module to the meter. It will be understood from the previous discussion how the module functions and interacts with the meter, and it is considered to be unnecessary to repeat this discussion.

In the embodiment of FIGS. 1 and 2 the control unit, i.e. the switches 11a, 11b, incorporated in the handle of the standard hot probe 4, are used to activate and deactivate the speech module, and select and control the functions of the speech module via its microprocessor 15, instead of or in addition to selecting and controlling the functions of the measuring device 1 via its internal processor. The additional function options of the speech module are accommodated by appropriate programming of the microprocessor 15. The microprocessor 15 can also interact with and/or control the meter processor to select and control the various speech module functions and/or measuring device functions as required. However, if in practice the hot probe 4 does not incorporate a control unit, or the standard control unit is incompatible with the speech module, the standard meter probe 4 will be replaced by a modified probe specifically designed for the latter purpose, incorporating an appropriate control unit including switches and wiring. Alternatively, it is envisaged that an appropriately designed separate control or adapter unit could be plugged in between the standard hot probe and the meter. The standard cold probe 3 used with meters is generally a relatively simple single-conductor probe devoid of switches, which should therefore be compatible with, and usable with, the speech module.

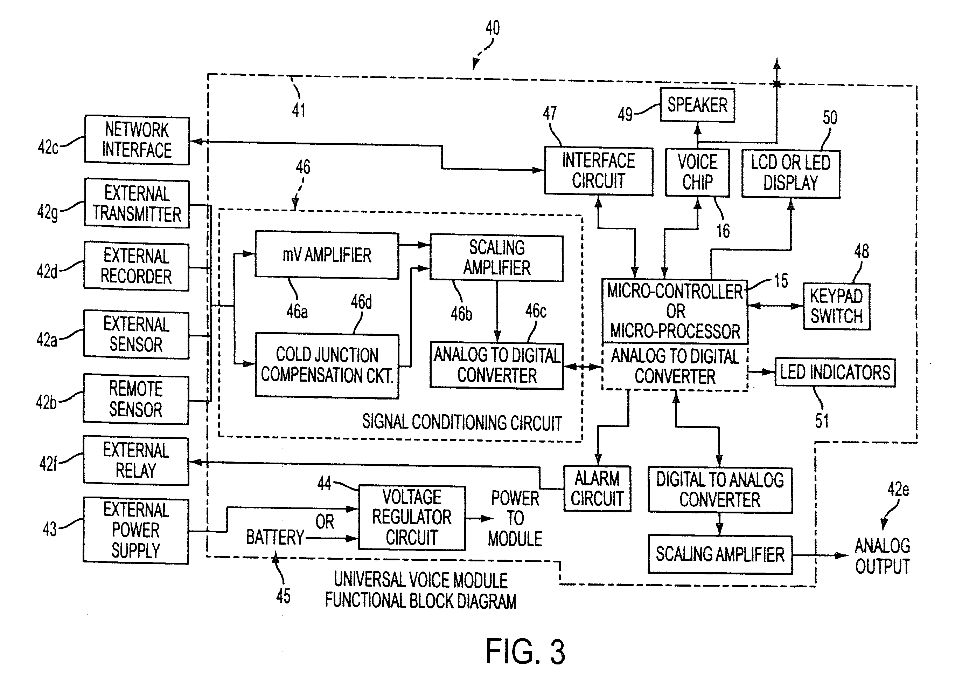

The speech module 13 can be relatively unsophisticated, as described earlier with reference to FIGS. 1 and 2. However, as also outlined earlier, the module can include additional capabilities and functions, and can be adapted to be compatible with a wider range of meters or other signal sensing apparatus or instrumentation. Such a speech module is shown schematically in block diagram form in FIG. 3.

The internal circuitry of the speech module 40 shown in FIG. 3 is contained within a module housing indicated schematically by the dot-dash line 41. Various internal input and output devices are connectable to the speech module to provide inputs to, or receive outputs from, the module. The interconnections are shown schematically, spaced apart, although some of them can in practice be incorporated within common connectors.

The devices which provide inputs to the speech module can include voltage etc. sensors (e.g. contact probes), temperature sensors (e.g. thermocouples), pressure sensors, frequency sensors, flow sensors, pulse sensors, humidity sensors, pH sensors, conductivity sensors and many other types of sensors or detectors connected directly to the speech module, and represented generically in FIG. 3 by external sensor 42a. Alternatively, the sensors can be connected to the speech module remotely, via an associated standard measuring device or other apparatus/instrumentation, represented generically in FIG. 3 by remote sensor 42b. If the latter input devices incorporate networking capability, they may also be connected to the module, as represented by the network interface 42c.

An external power supply 43 is connectable to the speech module to power the module via an internal voltage regulator circuit 44, although alternatively or as a back-up, the module can be powered by an internal battery 45.

The devices which receive outputs from the speech module can include meters or other apparatus/instrumentation incorporating processors and optionally a networking capability, connected to the module (as in the FIG. 2 configuration) through the network interface 42c. Peripheral devices such as data loggers, panel meters, controllers, signal conditioners, printers and recorders (as in the FIG. 1 configuration), are represented generically in FIG. 3 by external recorder 42d. If the latter peripheral devices incorporate processors, they may also be connected to the module through the network interface 42c. Similarly if the peripheral device is a computer for further conditioning/processing the module output, this may also be connected to the module through the network interface 42c. The network interface 42c may support communication with any suitable communications network, for example, the Public Switched Telephone Network (PSTN), a wireless network, a wired network, a Local Area Network (LAN), a Wide Area Network (WAN), virtual private network (VPN) etc.

The foregoing apparatus/devices usually require a digital output from the module, but an analog output 42e can be provided, for example for driving analog devices such as an analog panel meter or an analog recorder.

The output-receiving devices can also include an external relay 42f connectable to an internal alarm circuit. The relay, in operation will be connected to an audible or visible alarm which warns the user if a predetermined desired or undesired value or condition is sensed or is imminent.

The speech module circuitry incorporates a signal conditioning circuit 46 including a mV amplifier 46a, scaling and/or linearizing amplifier 46b and analog-to-digital converter 46c. The circuit 46 conditions the incoming signal, as is necessary with certain types of sensors, before it is applied to the module microprocessor/controller 15. The circuit 46 also incorporates a cold junction compensation circuit 46d which may be required as a reference when the input is derived from a temperature sensor such as a thermocouple. The manner in which this circuit functions will be apparent from U.S. Pat. No. 6,074,089 (Omega Engineering, Inc), incorporated herein by reference. The microprocessor 15 may then provide the conditioned signal to the voice chip 16. The voice chip 16 in addition to providing an output to speaker 49 may also be capable of providing a voice representation back to microprocessor 15 for output to the network interface 42c through the interface circuit 47. The voice representation may then be provided to any suitable networked device connected to the network interface.

When the speech module is connected in the FIG. 1 configuration, the output signals from the meter processor, including the test results/measurements values and control signals from the meter and probe switches, are applied via an interface circuit 47 to the microprocessor 15. Additionally or alternatively, under the control of a module keypad switch device 48, the microprocessor, as explained earlier, translates the data into signals that cause the speech synthesizer or voice chip 16 to verbally enunciate, via an internal speaker 49, and/or an external speaker or headphones, etc., the data visually displayed by the meter, and/or warnings and/or instructions, and/or the results of computations/calculations carried out by the microprocessor. The microprocessor also drives an LCD or LED display 50 which visually displays, for example, the data displayed by the meter display 5. The microprocessor also controls various LED indicators 51 which identify, for example, the test/report functions selected, alarm conditions and low battery condition. The microprocessor also outputs data to the external peripheral devices, for example, either via an analog output 42e, or via a personal computer interface circuit 47.

When the speech module is connected in the FIG. 2 configuration, the output signals from the external/remote sensors 42a and 42b are fed, optionally via the signal conditioning circuit 46, to the microprocessor 15. The speech synthesizer circuitry functions as described above, and the module output data is output, via the interface circuit 47 to the network interface 42c, which in this instance may be connected to the meter processor. The speech module microprocessor 15 and the meter processor will interact/interface to effect the necessary test/report function selections, depending upon whether the selections are effected via the switches on the face of the meter, the speech module key pad, or the probe control unit switches.

The speech module is preferably able to enunciate in different languages. This can be achieved for example, by the use of software, by the installation of interchangeable different language voice chips 16, by using a multi-lingual voice chip, or by language selection using the keypad switch 48 or external PC 42c.

The synthesized speech modules described and illustrated possess numerous advantages.

A speech module in accordance with an exemplary embodiment is capable of doing more than enunciate verbally what is seen on a meter, controller, readout device screen, a recorder, or graphic presentation device. It is capable of verbally providing instructions and information that cannot be displayed. For example, if a sensor is part of a heart-monitoring device, and there is no visual screen, a verbal indication of the pulse or erratic behavior thereof with instructions as to what steps are to be taken is essential. Similarly, if, for example, a device is used to measure temperature, not only can the temperature be verbally reported by the speech module in situations where there is not an opportunity to visually observe the indication, but also various steps to be taken can be stored in the module and verbally stated. The module can enunciate the time the information was provided audibly.

Another example is that if flow rate is being measured, the speech module can audibly indicate not only the flow rate, but also indicate the quantity of material that flows from Time A to Time B. The module can also be set to audibly give readings at particular time intervals as required, or to indicate the time to set or reset parameters. For example, the module could say:
"Its 2:15 p.m."
"The voltage is now 120."
"Reset voltage now."

An individual speech module can be used with or accommodate more than one type of signal. For example, a temperature control input device could also be used as a millivolt input device or a resistance-measuring device.

The speech module can contain a microprocessor and can be programmable by the use of software from a PC so as to provide different functions and settings. The module can also be programmable by external remote control as well as by internal and external controls.

The speech module can incorporate signal range adjustments such that it can provide a greater range of verbal enunciation than an indicator can display visually. For example a visual panel meter or controller can indicate temperature to a 10^{th} of a degree whereas the module can verbally indicate the temperature to a 100^{th} of a degree, even though it is not visually observable.

The speech module can also have the ability to perform certain functions internally that are not part of the readout device or recorder. For example, if a simple circular chart recorder is recording temperature or pressure variations over time, the speech module could have a built-in on/off controller or Proportional Integral Derivative (PID) controller. Therefore, the module can add various control features to the readout or recording device as required.

The speech module can also possess storage capabilities, and include data logging functions and recording functions.

The speech module can be connectable to a PC with RS-232, RS-422 serial communications, Ethernet, RS-485 and RS-488 serial links, USB, and other links.

The speech module can have, in addition to speech outputs, both analog and digital outputs.

The speech module provides an enhancement to any device that indicates or records a parameter, in that it verbally enunciates and/or controls information, instructions and data that is not displayed by the controlling or recording device. The module can verbally give information in addition to that provided by the device to which it is connected, to enhance the performance of the device.

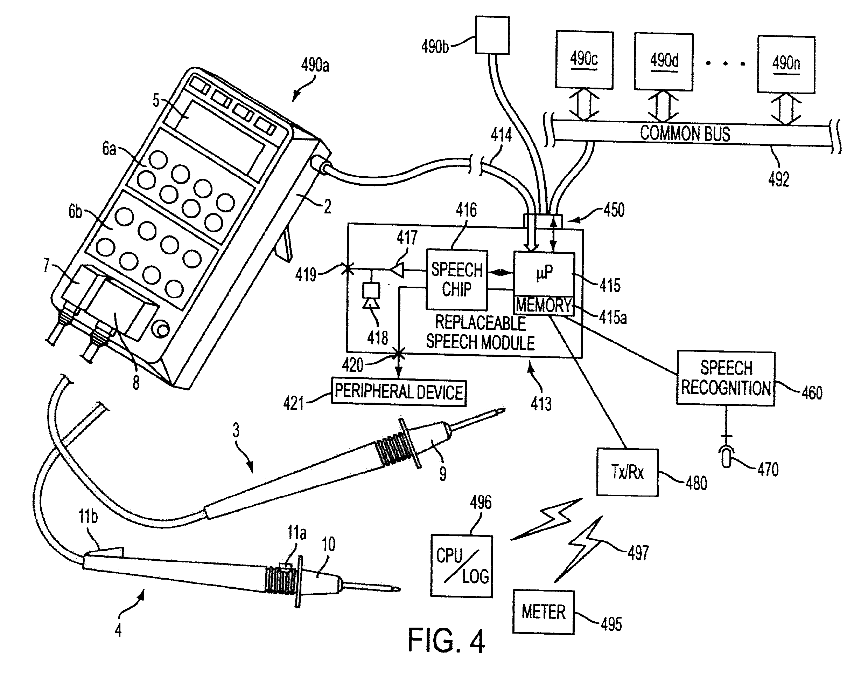

Referring now to FIG. 4 another embodiment of a speech module 413 is shown. In this exemplary embodiment the module 413 may be configured as a universal verbalizer that can be connected to a standard or conventional piece of metering equipment so that the standard piece of metering equipment becomes voice command operable. For example, a conventional measuring device for measuring stimuli such as voltage, current, etc. may be operated using buttons and dials. The universal verbalizer gives, for example, the conventional measuring device voice, speech, and voice command capability so a user can operate the measuring device using voice commands without having to physically activate keys or dials on the measuring device and may listen to the speech without looking at the display. One advantage of the voice command capability is that the user's hands are free to manipulate measurement probes of the metering devices.

The module 413 may include a microprocessor 415, a memory 415a, a speech synthesizer 416 connected to the microprocessor 415, a speech recognition module 460 connected to the microprocessor 415, and a transceiver 480 connected to the microprocessor 415.

The speech synthesizer 416 may be substantially similar to speech synthesizer 16 described above with respect to FIG. 1. The speech synthesizer 416 may be connected to an amplifier 417 that drives a loud speaker 418 or other suitable acoustic transducer for enunciating audible speech. The amplifier 417 may also be connected to, for example, any suitable audio jack 419 so that any suitable peripheral devices, including, but not limited to, headphones or portable speakers may be connected to the module 413 for speech enunciation.

The speech recognition unit 460 may be any suitable software or hardware implemented recognition unit capable of converting audible sounds into resulting analog or digital signal. The resulting signals may be used to, for example, control the module 413 as will be described in greater detail below. The speech recognition module 460 may be connected to, for example a microphone 470. The microphone 470 may be integral to the module 413. In other embodiments the microphone 470 may be a peripheral device that is connected to the module 413 through, for example, a suitable wired or wireless connectivity port. For example the speech recognition unit may be configured to receive signals from for example, wireless microphones including, but not limited to Bluetooth, Zigbee, radio frequency, infrared and cellular compatible headsets and the like.

The module 413 may be configured so that it may be controlled through the speech recognition unit 460. For example, the module 413 may recognize certain words or phrases spoken by a user and then perform the appropriate action. In one embodiment, when programming the module 413 with respect to the ranges to be measured, the module 413 may be configured or programmed to recognize voice commands including, but not limited to, "low limit", "high limit", "low alarm" or "high alarm". In this example, if the limits/alarms are not set the module 413 may prompt the user to specify a value for each limit/alarm after the command is spoken. If the limits/alarms have been previously set when the commands are spoken the module 413 may audibly indicate the corresponding value. In alternate embodiments the corresponding values for each command may be presented on a display of the module 413 and/or on the display of one or more measuring devices 490a-490n connected to the module 413. In still other alternate embodiments the corresponding values for each command may be presented to a user aurally and visually. Other commands that may be recognized by the module 413 for operating the module may include, but are not limited to, "start data logging", "stop data logging", "start measurement", "stop measurement", "send data wirelessly", "engineering units" (which may allow the user to specify English, SI or any other suitable units of measure) and the like. It is noted that while English commands are described herein the module may be configured to recognize commands from any suitable language. In other embodiments, the module 413 may be configured to recognize any suitable commands.

The voice commands recognized by the module may also be user definable. For example, the module 413 may have a set up menu with voice record features where a user can associate the voice recording with a function of the module 413 and/or the connected measurement devices. The user may also be able define engineering units as desired: For example, if a user wants to use a particular engineering unit, such as degrees Kelvin, the user may use the voice record feature to record the word "Kelvin" and may associate appropriate characteristics, in this instance, a temperature scale, with the newly defined engineering unit. A user may subsequently select the newly defined engineering unit for use.

In alternate embodiments, the user may be able to configure macros (i.e. a series of on or more commands) so that the macros are initiated through the voice commands. Although the programming of the module 413 is described above through the use of voice commands, it is noted that the module may also include keys or any other suitable input for programming the module 413. For example, the module 413 may be programmed using a personal computer connected to the module or keypad of the module 413. In alternate embodiments, the module 413 may be programmed in any suitable manner.

The module 413 may be configured so that a predetermined event occurs, such as for example, a predetermined key on the module 413 is pressed or a predetermined voice command is spoken, before the module 413 can be configured or programmed. For exemplary purposes only, there may be a configuration button on the module 413 that is pressed before the module can be configured using the voice commands. In alternate embodiments, the voice command "configure limits" is spoken before the module 413 can be configured. In still other embodiments, a user of the module 413 may be able to program a user specified voice command or password that would allow the module 413 to be configured. In alternate embodiments, any suitable voice command, key or configuration access method may be utilized. The password or configuration button and/or voice command may prevent the module from entering a configuration mode while in use or sitting idle when individuals in proximity to the module 413 are having a casual or business related conversation. The password or configuration button and/or voice command may also prevent unauthorized changes made to the meter.

The transceiver 480 may be any suitable transceiver configured to allow the module 413 to transmit gathered information or to receive information from other devices. For example, as can be seen in FIG. 4, the module 413 may be wirelessly connected to an external device such as meter 495 through any suitable wireless connection 497. The meter 495 may be any suitable meter including, but not limited to a multimeter, a flow meter, a temperature meter, strain gauge, load cell and wind speed meter. The wireless connection 497 may be any suitable wireless connection including, but not limited to, Bluetooth, infrared, radio frequency, Zigbee, 802.11, WiFi and cellular. The information gathered by the meter 495 may be transferred to the module 413 via the transceiver 480 through the wireless connection 497. The signals received through the transceiver may be converted to speech by speech synthesizer 416 for presentation to a user. Although FIG. 4 only shows one meter 495 wirelessly connected to the module 413 it should be realized that in alternate embodiments any suitable number of wireless meters may be connected to the module 413.

As another example, the transceiver may support a wired communications connection, for example, for connection with a Local Area Network (LAN), a Wide Area Network (WAN), virtual private network (VPN), or any other suitable communications connection.

The transceiver may also be configured to transmit information received by the module 413 to other external devices including, but not limited to, data storage devices, video displays, audio equipment and other meters. For example, the module may be connected to a meter 490a as will be described in greater detail below. The meter 490a may be substantially similar to the meter 1 described above with respect to FIG. 1. Information gathered by the meter 490a may be transmitted to the module 413 in any suitable manner such as by for example wired connection 414. In other embodiments the information from meter 490a may be received in the module 413 via a wireless connection as described above. The information from the meter 490a may be converted to speech by the speech synthesizer 416 and presented to a user. The information from the meter 490a may also be transmitted by the transceiver 480 over the wireless connection 497 to, for example, a computer/storage device 496 for analysis and/or for data logging. Although module 413 has been described as having the transceiver 480, in alternate embodiments the module 413 may have separate transmitters and receivers or may be configured with only a transmitter or a receiver.

The module 413 may also have any suitable number of output ports such as, for example, port 420 that may allow any information transferred into the module from, for example, a meter to be sent to an external peripheral device 421 as if the meter was connected directly to the peripheral device 421. Examples of peripheral devices 421 include, but are not limited to, computers, storage devices, printers and modems. The output port 420 may be any suitable output port including, but not limited to, an instrument bus, universal serial bus, Firewire, RS232, RS422 serial communications, Ethernet, RS485, and RS488. It is also noted that the output port(s) 420 and the microprocessor 415 may be suitably configured so that the module 413 can communicate information to other devices through, for example, a network such as the Internet, a cellular network, a wide area network or a local area network. Likewise, in alternate the module 413 may have input ports (not shown) that are substantially similar to the output ports that are configured to allow the module 413 to receive information over the network. In other alternate embodiments the port 420 may be a bi-directional port that is capable of sending or receiving information from a peripheral device and/or a network.

The module 413 may also have any suitable number of ports for connecting the metering or measurement devices 490a-490n to the module via a wired connection. The ports 450 may include, but is not not limited to, universal serial bus, Firewire, RS232, RS422 serial communications, Ethernet, RS485, RS488, and analog input voltage and current ports. There may be separate ports for each device connected to the module 413 or the module may be connected to any suitable network to which the devices 490a-490n are connected. For example, in this embodiment measurement devices 490a and 490b are shown with individual connections while measurement devices 490c-490n are shown connected in parallel to a common bus 492.

The module 413 may be configured so that the module recognizes which meter is it receiving data from at any given time. For example, when module 413 is receiving information from meter 490a the information may be stamped with a time that the information was received or measured and the name of the meter from which the data received. In one embodiment, the meter may transmit any suitable identification information to the module 413 so the module can record which meter the data originated. For example, the meter 490a may transmit a serial number, a model number, a user assigned name, etc. In alternate embodiments, the module 413 may be user configurable so that the user can assign each meter connected to the module any suitable identifier. In still other alternate embodiments the incoming data may be identified by the input port in through which it arrived. The module 413 may be configured so that it can receive information from several meters 490a-490n at one time. In alternate embodiments, the module 413 may be configured so that it only received information from one meter at a time or from pre-designated meters. In still other embodiments, the module 413 may have any suitable switch for switching the input so that a user can specify which meter 490a-490n the module 413 is to receive data from.

It is noted that when the module 413 is connected to one or more meters the module 413 may be configured to keep track of which measurements are coming from which meters. For example, the speech synthesizer may be configured to identify which meter an annunciated measurement is coming from. For exemplary purposes only, if meter 1 is measuring temperature and meter 2 is measuring flow rate the speech synthesizer may announce "meter 1 ... temperature is 10 degrees Celsius", "meter 2 ... flow rate is 2 liters per minute", etc. In alternate embodiments any suitable announcements may be utilized. In other alternate embodiments, the module, 413 may be configured to display which meter the measurements are coming from on a display of the module. In still other alternate embodiments, the module may indicate to the user which meter the measurements are coming from in any suitable manner.

As noted above, the module may transmit information to, for example, computer/storage 496 for data logging. The information to be logged may also include the identifier from the metering device the data originated from. In other embodiments, the module 413 may be configured for data logging. The module 413 may be configured so that measurements are taken at predetermined time intervals such as for example, every 100 milliseconds, every minute, every ten minutes or any other suitable time interval. The timed measurements to be logged may be time stamped with the time and date the information was measured as well as with the identification of the meter from which the measurements were taken. For example, the memory 415a may be suitably configured to time stamp and otherwise identify the data received by the module in store it in any suitable manner for later retrieval. For example, the data logged in the memory 415a of the module 413 may be printed through a printing device connected to the module 413 or transferred to another computer/storage device for analysis and recordation. In still other embodiments, the module 413 may include a built in printer for printing the stored data.

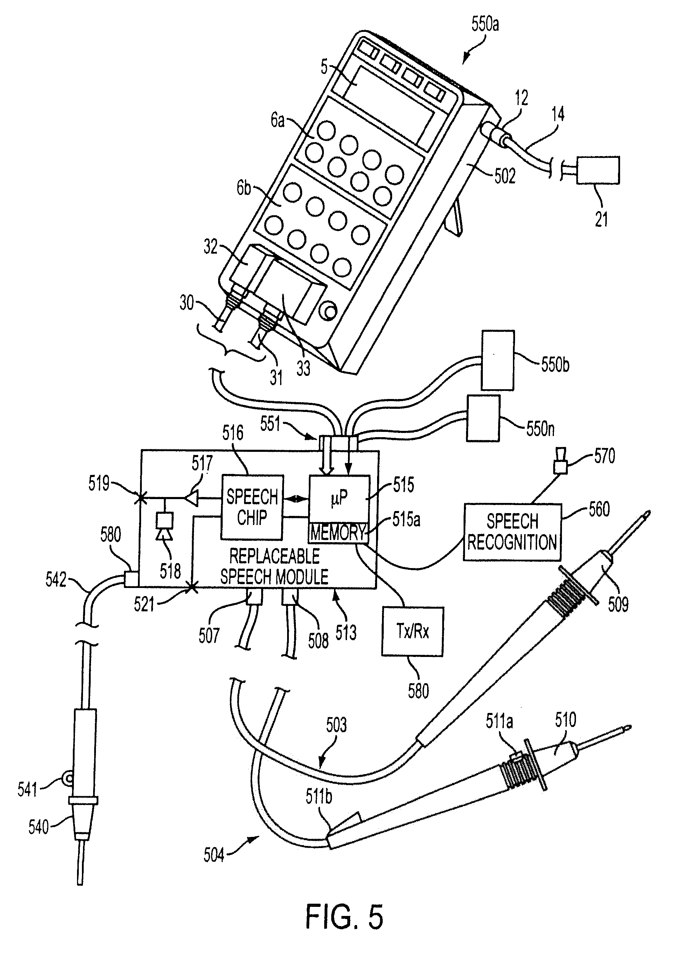

As can be seen in FIG. 5, the universal verbalizer module 513 may also be configured so that it can be connected to one or more measuring devices 550a in a position between, for example, measurement probes or other sensors 509, 510 and the one or more measuring devices 550a-550n. In this exemplary embodiment, the module 513 may be substantially similar to module 413 described above and its operation and presence may be transparent to measuring device 550a. For example, when the module 513 is in position it may appear that the measuring device 550a is receiving signals directly from the measurement probes or other sensors 509, 510. In this exemplary embodiment, the module 513 may include a processor, 515, a memory 515a, a speech synthesizer 516, an amplifier 517, a speaker 518, audio jack 519, a peripheral device connection port 521, speech recognition unit 560, microphone 570 and transceiver 580, and input ports 551.

As noted above the input port(s) 551 may allow the module 513 to be networked to and exchange signals with more than one metering device 550a-550n. For example, the module may be connected to meter 550a-n, which may be substantially similar to the meters described above with respect to FIG. 4. It should be realized that the meters 550a-550n may be any suitable meter as described above.

In this example, the module 513 may include connectivity ports 507, 508, 580 for connecting, for example, any suitable number of measurement probes 509, 510, 540. Measurement probes 509, 510 may be substantially similar to probes 9 and 10 described above. Probe 540 may be a multifunction probe having a selector switch 541 for switching a mode of operation of the probe (e.g. switching between temperature, flow, electric, etc). The multifunction probe may work in conjunction with one or more of the probes 509, 510 or as a standalone probe. For example, the multifunction probe may be configured to be selectively operable as the positive or negative probe for measuring electrical signals, a temperature probe, a flow meter or the probe 540 may have any other suitable probing function. It is noted that the module may be configured to interface with any suitable probe or sensing device including contact probes (i.e. probes that have to contact an object to obtain a measurement) and non-contact probes (i.e. probes that do not have to contact an object for a reading) including, but not limited to, decibel meters and infrared pyrometers. The probes 509, 510, 540 may be connected to the module 513 through wired connections such as connections 503, 504, 542 or through wireless connections such as, for example, infrared, Bluetooth, Zigbee or any other suitable wireless connection.

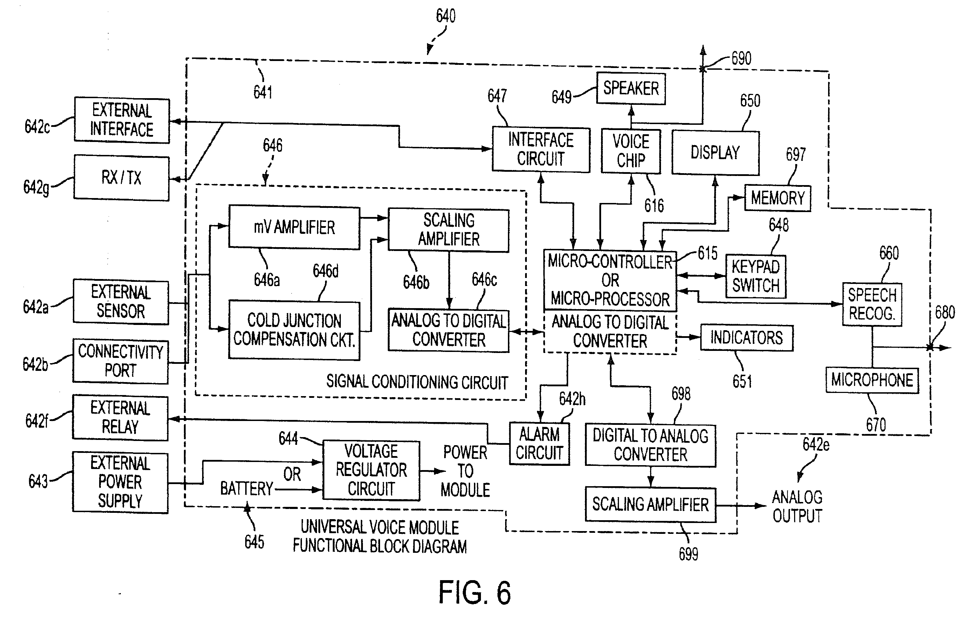

Referring now to FIG. 6 the universal verbalizer modules 413, 513 will be described in greater detail. It is noted however, the details of the verbalizer modules 640 shown in FIG. 6 are only exemplary in nature and the verbalizer can have any number and/or type of components configured to perform aspects of the embodiments disclosed herein. In this example, the circuitry of the module 640 may be located inside a housing indicated by the dashed line 641. The housing 641 may be a housing including only the universal verbalizer circuitry. In other embodiments the housing may include the universal verbalizer circuitry as well as metering circuitry as will be described below. Here, the module 640 includes a speech synthesizer 616, speaker 649, a display 650, a processor 615 (which may include an analog to digital converter), memory 697, keypad 648, indicator lights 651, speech recognition unit 660 microphone 670 and audio jack 680 connected to each other as shown in the Figure. The speech synthesizer 616, speech recognition unit 660, memory 697 and processor 615 may be substantially similar to those described above.

The display may be any suitable display such as for example a conventional display or a touch enabled display. The keypad 648 may include any suitable keys for operating the module 640. The indicator lights may work in conjunction with the display or on their own to display any suitable information including, but not limited, to battery/power status (when the module 640 is operating by battery 645 or through an external power source 643 via voltage regulator 644), an on/off status, and wired or wireless transmission status (indicators illuminate when a transmission is occurring). A digital to analog converter and scaling amplifier 698, 699 may also be connected to the processor for producing an analog output 642e where appropriate.

An interface circuit 647 may be connected to the processor 615 so that the processor is interfaced with various devices. For example, interface circuit 647 may connect the processor to an external interface 642c and transceiver 642g. The external interface 642c may allow the module 640 to be connected to an external computer/storage device as described above so that the data received by or produced by the module 640 can be sent to the computer/storage for analysis and/or data logging. It is also noted that as described above the memory 697 may also be configured for data logging where the data logs stored in the memory 697 can be later transferred to any suitable external device. The transceiver 642g may be substantially similar to transceiver 480 described above.

The module may include signal conditioning circuit 646 having a mV amplifier 646a, a scaling and or linearizing amplifier 646b and an analog to digital converter 646c. The conditioning circuit 646 may also include a cold junction compensation circuit 646d, which may serve as a reference when the input signals are derived from a temperature sensor such as, for example a thermocouple. The conditioning circuit 646 may condition signals from various measurement instruments before the signals are transmitted to the processor 615 as described in U.S. Patent No. 6,074,089 noted above. The conditioning circuit 646 may be configured to interface with any suitable number of metering devices and/or sensors. For example, connectivity port 642b may be connected to the conditioning circuit. The connectivity port 642b may be substantially similar to port 450 described above and allow for any suitable number of meters to be connected or networked with the module 640. External sensor port 642a may be substantially similar to ports 507, 508, 580 described above with respect to FIG. 5. The external sensor port 642a may allow for the connection of any suitable number of sensors including, but not limited to, contact probes, temperature sensors, pressure sensors, frequency sensors, pH sensors, flow sensors, pulse sensors, humidity sensors and conductivity sensors.

The module 640 may also include an external relay 642f and alarm circuit 642h that may be substantially similar to relay 42f and the alarm circuit described above with respect to FIG. 3.

In one embodiment, the module 640 may be connected to the external sensors (e.g. in between the sensors and the meter) in a manner substantially similar to that described above with respect to FIG. 5. In other embodiments the module 640 may be connected to multiple meters as described above with respect to FIG. 4. In still other embodiments, the module 640 may be connected to both the external sensors and meters.

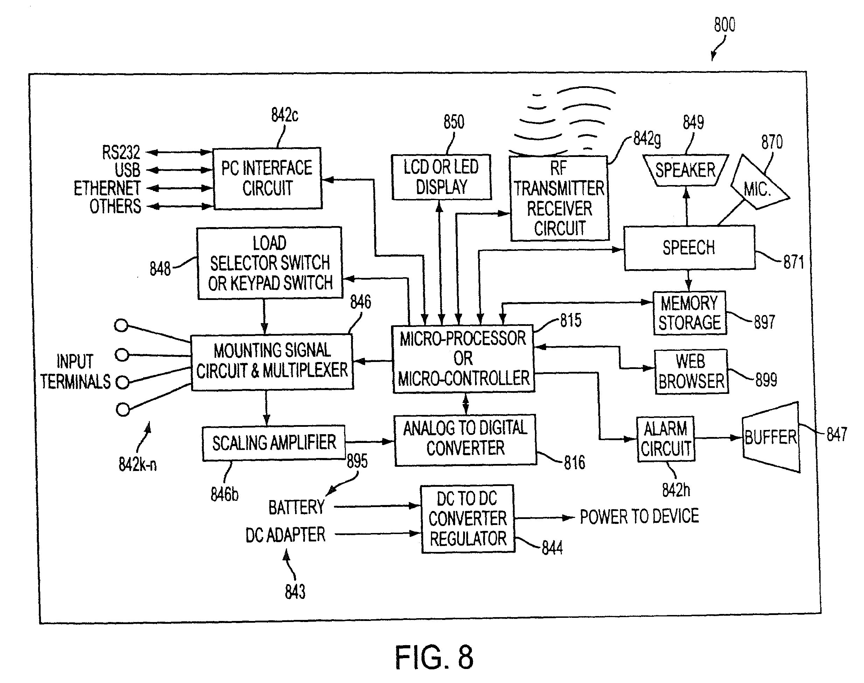

Referring now to FIG. 8, another exemplary schematic of the universal verbalizer module 800 is shown. In this exemplary embodiment the module 800 includes microprocessor 815, memory 897, analog to digital converter 816, display 850, transceiver 842g, external interface 842c local selector switch or keypad switch 848, measuring signal circuit and multiplexer (conditioning circuit) 846, scaling amplifier 846b, battery 845 and/or external power supply 844 and appropriate power converter 844, alarm circuit 842h, buzzer for the alarm circuit 847 (to signal an alarm), speech module 871, speaker 849, and microphone 871. The components of FIG. 8 are substantially similar to those described above with respect to FIG. 6. However, in this example the scaling amplifier 846b is shown as being separate from the signal conditioning circuit 846. The speech module 871 in FIG. 8 is shown as a combined recognition/synthesizer module that works in conjunction with the speaker 849 and microphone 870. The local selector switch/keypad switch 848 may allow a user to select which input 842k-n is to be the active input or in alternate embodiment all of the inputs may be active. As noted above the external device interface 842c can be configured to interface with any suitable device over any suitable protocol including, RS232, USB, Ethernet, and the other communication protocol described herein. In this example, the microprocessor may be configured to access the internet via any suitable web browser 899 to, for example, update software of the module 800 or to communicate with other devices over the internet.

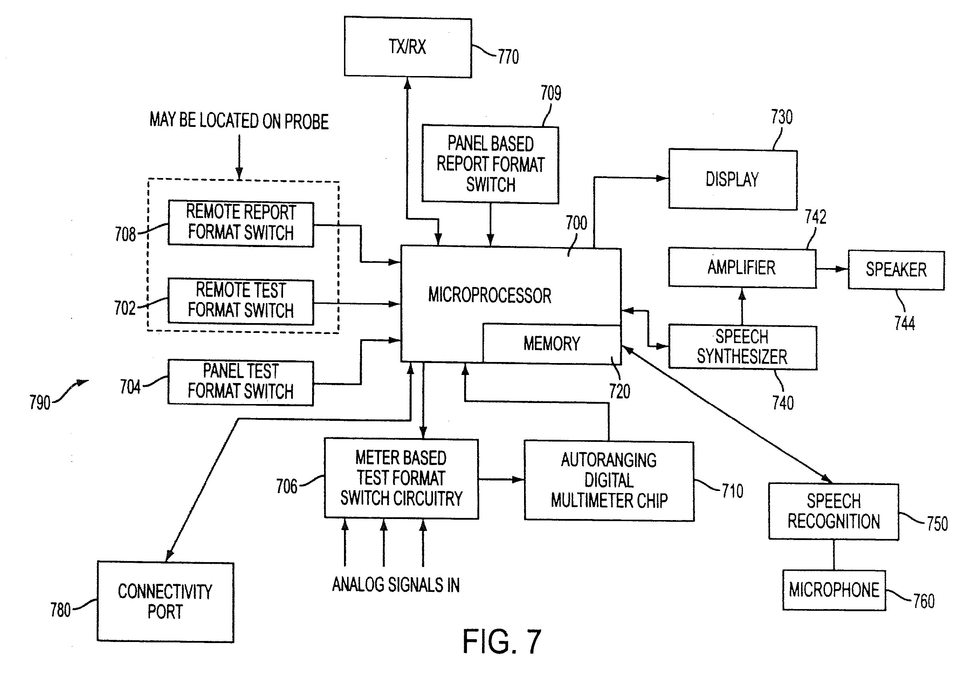

The universal verbalizer module described herein may also be configured as a standalone unit as can be seen in Figure 7 such that the module 790 includes the functionality of one or more meters and/or sensors. For example, the standalone unit 790 may include microprocessor 700, memory 720, speech synthesizer 740 (and related electronics such as amplifier 742 and speaker 744), speech recognition unit 750 (and related electronics such as analog to digital converters and microphone 760), display 730, transceiver 770 and connectivity port, which all may be substantially similar to the corresponding components described above with respect to FIGS. 4, 5 and 6. The standalone unit 790 may also include metering circuitry 702, 704, 706, 708, 710 for generating signals in response to stimuli to be sensed. The stimuli may include, but are not limited to, electric, flow, vibrational, chemical and pressure stimuli.

While operating, the standalone unit 790 may receive a command either through a keypad or through a voice command. The analog voice commands may be received in, for example, microphone 760, and converted through an analog to digital converter. The standalone unit may be configured using the voice commands in a manner substantially similar to that described above. The processor 700 may recognize the commands and perform the commands as described above. For, example, if a voice command to start measurements is recognized the appropriate sensors connected to the standalone unit may begin sensing stimuli. The microprocessor 700 may be configured to receive signals from a test format switching means including remote test format switches 702 and panel test format switches 704, (on the housing of the standalone unit 700) that generate and send a test format selection signal to a meter circuit 710 to cause the standalone unit 700 to operate in the selected format as is described in U.S. Patent 4,949,274 (e.g. timed report format, single report format, or any other suitable format). The standalone unit 700 may include test format switching circuitry 706 to select an appropriate analog input from test probes or other input device on instructions from the microprocessor. It is noted that the switches may be digital switches that are controlled through the voice commands. The microprocessor may also be configured to receive a meter output signal indicative of one or more measured value of a stimulus (or stimuli) and generate a report signal according to a selected report format. The report format may be selected using remote report format switch 708, panel based report format switch 709, or through voice commands. The report signal may be logged (time/date stamped) in the memory 720 for later retrieval and or analysis. The report signal may also be transferred to the display 730 or presented through the speaker 744 via the speech synthesizer 740.

The standalone unit 790 may also be configured so that the unit 790 may be networked with other standalone units or modules 413, 513. When networked the standalone unit 790 may send or receive commands or other data from other standalone units or module 413, 513 (or to any suitable computer/storage unit). The standalone unit may also wirelessly transmit or receive data or commands to any suitable equipment such as, for example, the equipment described herein.

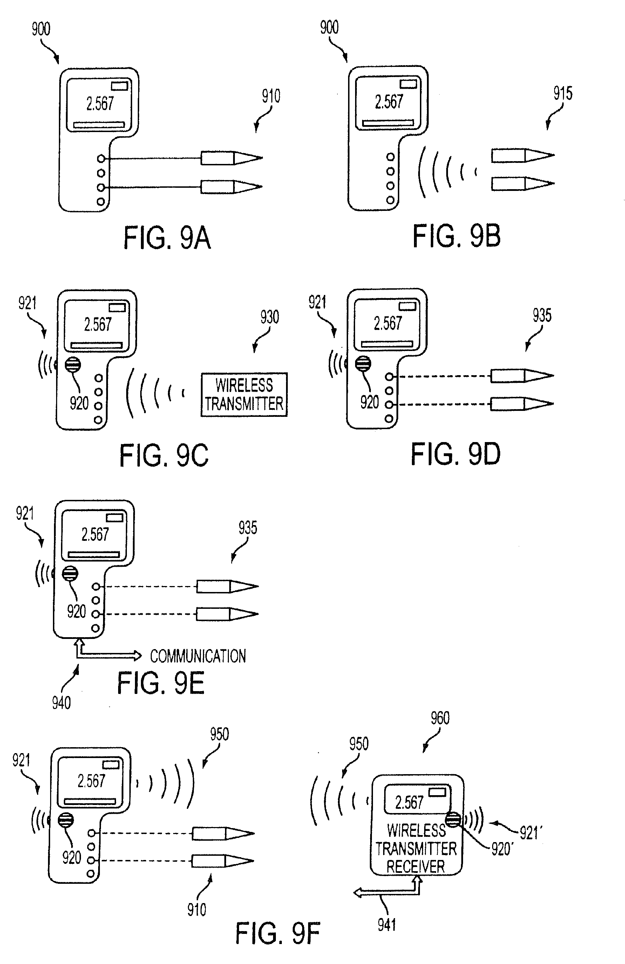

Referring now to FIGS. 9A-9F other exemplary illustrations of standalone units 900 are shown in different states of operation. For example, in FIG. 9A the unit 900 includes a display and wired measurement probes 910. In FIG. 9B the unit 900 is shown with wirelessly connected measurement probes 915. In FIG. 9C the unit is shown as receiving a wireless signal from wireless transmitter 930. The wireless transmitter may be any suitable device such, for example, as a remote measurement sensor. The wireless signal may be presented to the user of the unit 900 through the display and/or through the speech synthesizer as an audible signal 921 played through the speaker 920. In FIG. 9D the unit 900 is shown with wired or wireless probes 935 where the signal measured by the probes 935 is displayed on the display and presented as an audible signal 921 through the speaker 920 as described above. In FIG. 9E the unit 900 is substantially the same as that shown in FIG. 9D but in this example the unit 900 is communicating with an external device via connection 940. Connection 940 may be any suitable connection as described above including, USB, Ethernet serial connection, etc. In FIG. 9F the unit 900 is shown as having wired probes 910, speaker 920 outputting an audible signal such as synthesized speech pertaining to, for example, the measurements taken with the probes 910. The unit 900 in FIG. 9F is also shown as wirelessly communicating with a wireless transmitter/receiver 960. The wireless transmitter/receiver 960 may be substantially similar to unit 900. In this example the wireless transmitter/receiver 960 includes a display, a speaker 920' for outputting synthesized speech 921' and a communication port for communicating with external devices through connection 941 which may be substantially similar to connection 940 described above.

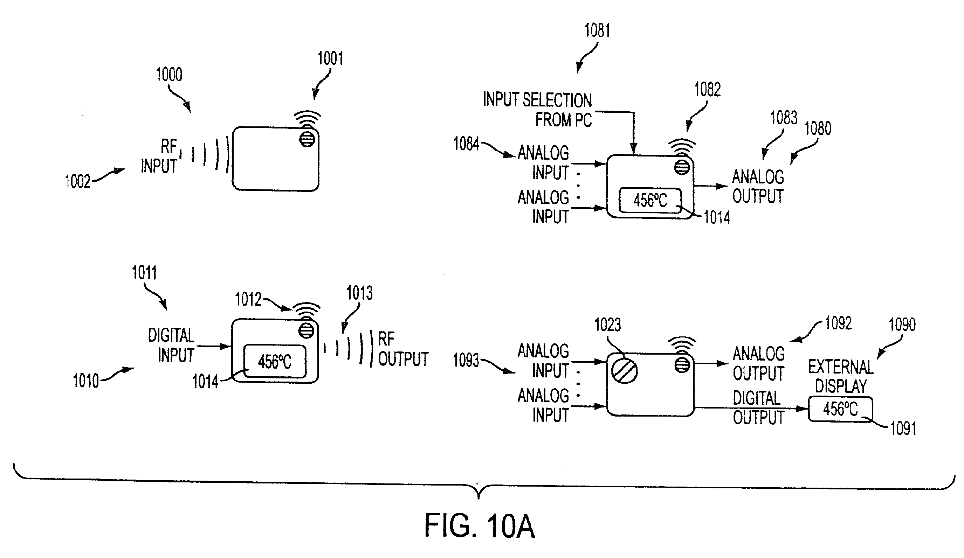

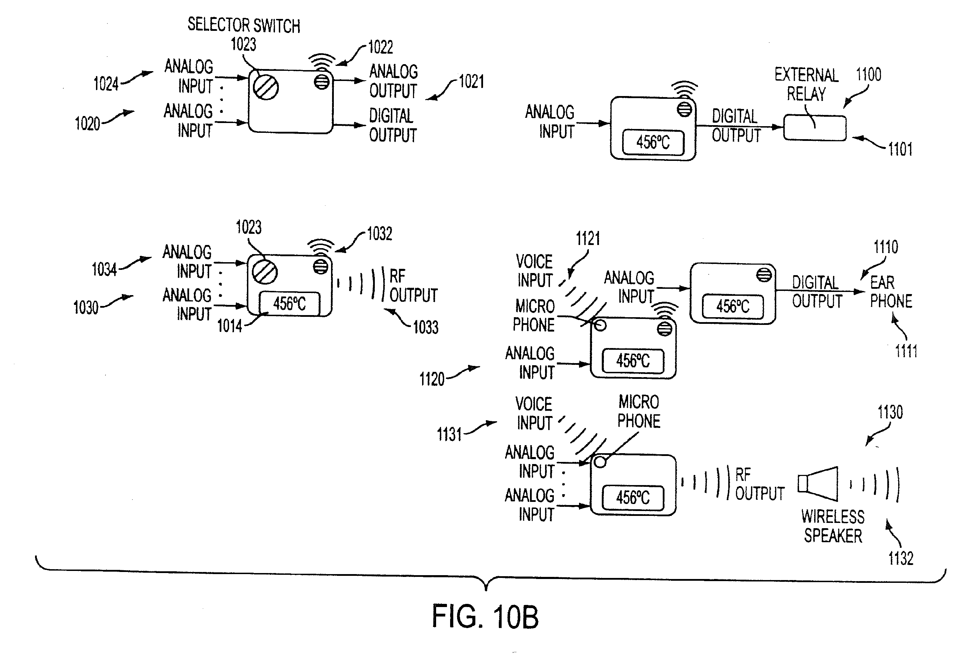

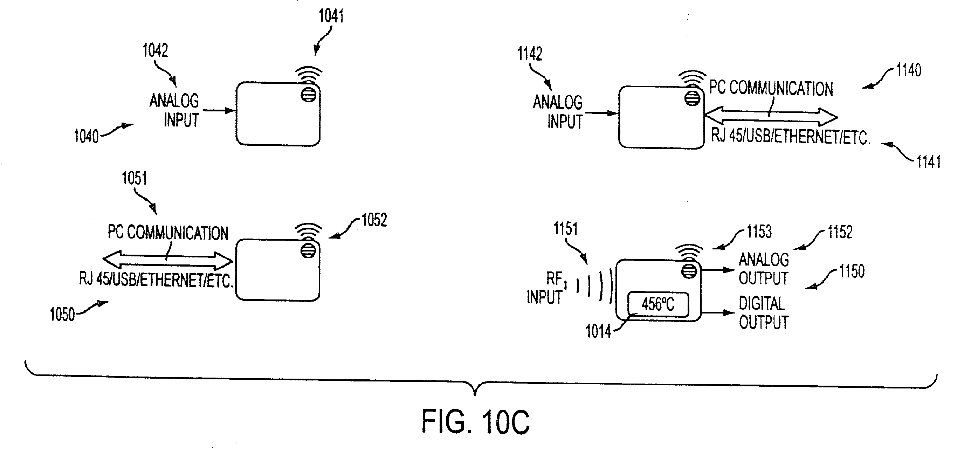

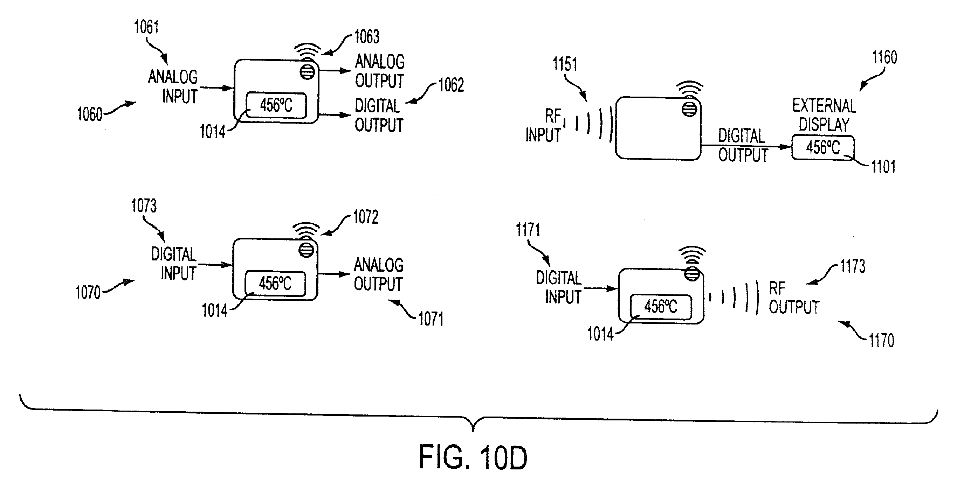

Referring now to FIG. 10 the universal verbalizer is shown in several different exemplary configurations or operational states. For example, the universal verbalizer 1000 is shown as having a radio frequency (RF) input 1002 and a synthesized speech output 1001. The universal verbalizer 1010 is shown as having a digital input 1011, a display 1014 a synthesized speech output 1012 and a RF output 1013. The universal verbalizer 1020 is shown as including a plurality of analog inputs 1024, an input/function selector switch 1023, synthesized speech output 1022 and a plurality of analog and digital outputs 1021. The universal verbalizer 1030 is shown as having multiple analog inputs 1034, an input/function selector 1023, display 1014, synthesized speech output 1032 and a RF output 1033. The universal verbalizer 1040 includes an analog input 1042 and synthesized speech output 1041. Verbalizer 1050 includes a bi-directional external communications port 1051 and a synthesized speech output 1052. Universal verbalizer 1060 includes an analog input 1061, display 1014, synthesized speech output 1063 and multiple analog and digital outputs 1062. Verbalizer 1070 includes a digital input, display 1014, synthesized speech output 1072 and an analog output 1071. The universal verbalizer 1080 includes multiple digital and analog inputs 1084 where the input selection is made by a computer 1081, synthesized speech output 1082, a display 1014 and an analog output 1083. Verbalizer 1090 includes multiple analog and digital inputs 1093, an input selector 1023, synthesized speech output and multiple analog and digital outputs 1092 feeding for example an external display 1091. Verbalizer 1100 is shown as having an output driving an external relay 1101. Verbalizer 1110 is shown as having an output driving an earphone 1111. Verbalizer 1120 is shown as having a built in microphone 1121 for receiving voice input. The universal verbalizer 1130 is shown as having a microphone 1131 for receiving voice input and a RF output for driving a wireless speaker 1132. Verbalizer 1140 is shown as having an analog input 1142 and a communication port 1141 for outputting information over, for example any suitable communication protocol as described herein. Verbalizer 1150 is shown as having a RF input 1151 a display 1014, synthesized speech output 1153 and multiple analog and digital outputs 1152. The verbalizer 1160 is shown as having a RF input 1151 with a digital output to drive an external display 1101. The universal verbalizer 1170 is shown as having an analog input 1170, display 1014, synthesized speech output and a RF output 1173. It is again noted that the examples shown in FIG. 10 are non-limiting examples and are for exemplary purposes only. The universal verbalizer may have any suitable configuration that may be any suitable combination of the configurations described herein.

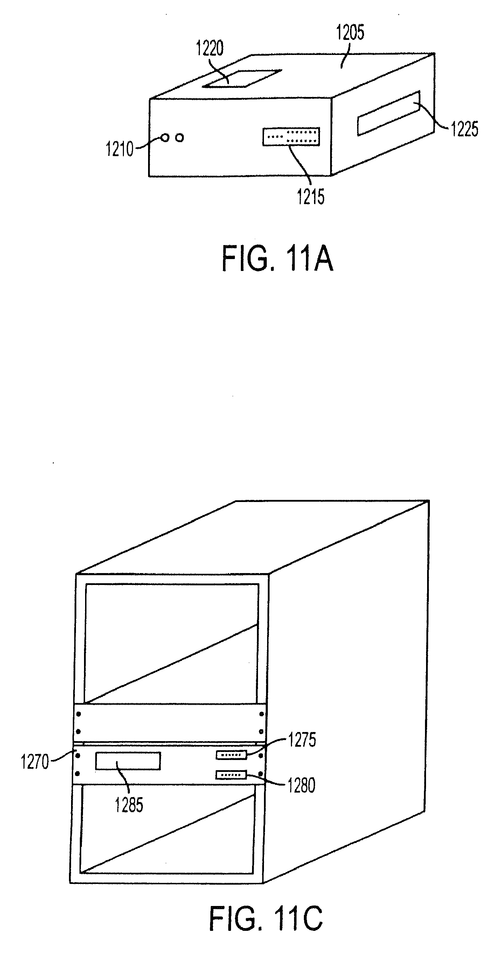

FIGS. 11A-11D show different exemplary packaging embodiments of modules 13, 413, 513 described above. Each of the disclosed embodiments may be powered by a suitable power supply. For example, the embodiments may be self powered, such as by one or more batteries or other self contained energy source, or may be powered by an external power source, such as an alternating current mains source of power. Note that each of the exemplary packaging embodiments may include various receptacles and user interface devices positioned on a suitable surface of the verbalizing device or located remote from the device.

In FIG. 11A any one of modules 13, 413, 513 may be packaged in or enveloped by a portable enclosure unit 1205 that may have a free hanging or dongle form factor. Portable unit 1205 may include receptacles 1210, 1215 for accepting probes, cables, conductors, etc. for connection to one or more meters, peripheral devices, networks, busses, or other devices as described above, or the various probes, cables, conductors, etc. may be built in. Portable unit 1205 may optionally include a display 1220 and other user interface devices 1225, as described above.

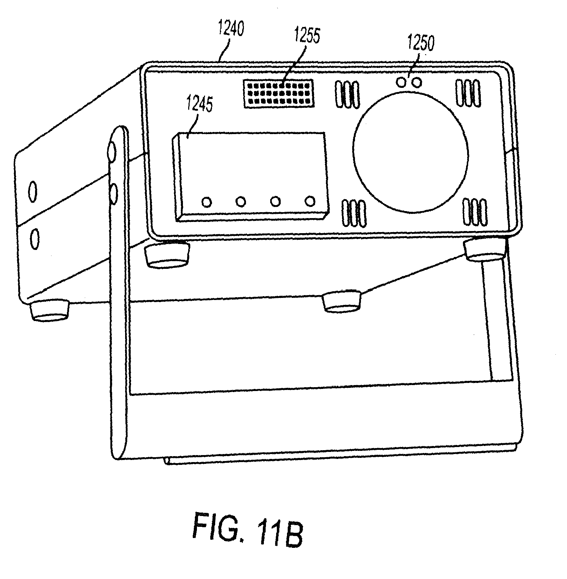

FIG. 11B shows an exemplary bench top enclosure unit 1240, in which any one of modules 13, 413, 513 may be packaged, for placement for example on a laboratory or work area bench top. Similar to the portable unit 1205, the bench top unit 1240 may include a display and other user interface devices 1245 and receptacles 1250, 1255 for accepting probes, cables, conductors, etc. for connection to one or more meters, peripheral devices, networks, busses, or other devices. The various probes, cables, conductors, etc. may also be built into the bench top unit 1240. In addition to being place on a bench top, the bench top unit 1240 may have other mounting schemes, for example, the bench top unit may be mounted on a wall, ceiling, or in any other suitable location.

Any one of modules 13, 413, 513 may alternately be packaged in a rack mounted enclosure unit 1270 as shown in Figure 11C. As with the other exemplary packaging embodiments, rack mounted unit 1270 may include receptacles 1275, 1280 for accepting probes, cables, conductors, etc. for connection to one or more meters, peripheral devices, networks, busses, or other devices, or the various probes, cables, conductors, etc. may be built in. The rack mounted unit 1270 may also plug into a bus or network as part of a rack configuration. The rack mounted unit 1270 may optionally include a display or other user interface devices 1285 similar to the other embodiments described above.

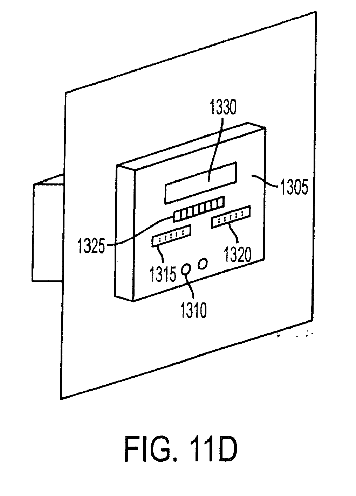

Figure 11D shows another embodiment, where any one of modules 13, 413, 513 may be packaged in a panel mounted enclosure unit 1305. Panel mounted unit 1305 may include receptacles 1310, 1315, 1320 for accepting probes, cables, conductors, etc. for connection to one or more meters, peripheral devices, networks, busses, or other devices as described above, or the various probes, cables, conductors, etc. may be built in. Panel mounted unit 1305 may optionally include a display 1330 and other user interface devices 1325, as described above.

It is noted that the exemplary embodiments disclosed herein may be used separately or in any combination thereof.

It should be understood that the foregoing description is only illustrative of the embodiments. Various alternatives and modifications can be devised by those skilled in the art without departing from the embodiments. Accordingly, the present embodiments are intended to embrace all such alternatives, modifications and variances that fall within the scope of the appended claims.

## Claims

**1.** An apparatus comprising:
receiving circuitry for receiving a signal; and
a speech module for converting the signal into speech.

**2.** The apparatus of claim 1, including a port for communicating with at least one measuring device and for providing the signal from at least one measuring device to the receiving circuitry.

**3.** The apparatus of claim 1, wherein the speech module is configured to produce speech in a plurality of languages.

**5.** The apparatus of claim 1, including a portable enclosure enveloping the receiving circuitry and speech module.

**6.** The apparatus of claim 1, including a bench top enclosure in which the receiving circuitry and speech module are packaged.

**7.** The apparatus of claim 1, including a rack mount enclosure in which the receiving circuitry and speech module are packaged.

**8.** The apparatus of claim 1, including a panel mount enclosure in which the receiving circuitry and speech module are packaged.

**9.** The apparatus of claim 1, wherein the speech module includes a speech recognition unit configured to recognize voice commands.

**10.** The apparatus of claim 9, including a processor configured to control the at least one measuring device using the recognized voice commands.

**11.** The apparatus of claim 10, wherein the processor is configured to recognize the voice commands in a plurality of languages.

**12.** The apparatus of claim 2, including a memory connected to the receiving circuitry and the speech module for storing the received data.

**13.** The apparatus of claim 2, including a wireless transceiver for communicating with the at least one measuring device.

**14.** The apparatus of claim 2, including a network interface for communicating with the at least one measuring device.

**15.** The apparatus of claim 14, wherein the network interface supports communication with one or more of a public switched telephone network, a wireless network, a wired network, a local area network, a wide area network, or a virtual private network.

**16.** A method comprising:
receiving a signal from at least one measuring device; and
converting the signal into speech.

**17.** The method of claim 16, further comprising converting the signal into speech in a plurality of languages.

**18.** The method of claim 16, further comprising communicating with the at least one measuring device through a network interface.

**19.** The method of claim 16, further comprising communicating with the at least one measuring device through a wireless transceiver.

**20.** The method of claim 16, further comprising storing the received data in a memory for data logging.

**21.** The method of claim 16, further comprising recognizing voice commands from a user for controlling the at least one measuring device.

**22.** The method of claim 21, further comprising recognizing the voice commands in a plurality of languages.

**23.** A system comprising:
a measuring device;
a sensor for providing a measurement signal; and
a verbalizer module connected between the measuring device and the sensor having receiving circuitry for receiving the measurement signal; a speech module for converting the signal into speech, and a port for providing the signal to the measurement device, wherein the operation and presence of the verbalizer module is transparent to the measuring device as if the measuring device is receiving signals directly from the sensor.

**24.** The system of claim 23, wherein the verbalizer module is configured to produce speech in a plurality of languages.

**25.** The system of claim 23, wherein the verbalizer module includes a speech recognition unit configured to recognize voice commands.

**26.** The system of claim 25, including a processor configured to control the at least one measuring device using the recognized voice commands.

**27.** The system of claim 26, wherein the processor is configured to recognize the voice commands in a plurality of languages.
